# EUROPEAN PATENT APPLICATION

(11) **EP 2 377 823 A1**
(43) Date of publication of application: **19.10.2011**
(21) Application number: 09834892.3
(22) Date of filing: 22.12.2009
(51) Int. Cl.: C03B 33/04, B23K 26/00, B23K 26/38, B28D 5/00, C03B 33/09

(54) **METHOD AND DEVICE FOR CUTTING BRITTLE-MATERIAL PLATE, AND WINDOW GLASS FOR VEHICLE**

(30) Priority: 25.12.2008 JP 2008329734
(71) Applicant: Asahi Glass Company Limited, Chiyoda-ku Tokyo 100-8405 (JP)
(72) Inventor: FUKASAWA, Yasuji, Tokyo 100-8405 (JP); MATSUMOTO, Akinori, Tokyo 100-8405 (JP); SAITO, Isao, Tokyo 100-8405 (JP); FUJITA, Sanae, Tokyo 100-8405 (JP)
(74) Representative: Müller-Boré & Partner Patentanwälte
(86) International application number: PCT/JP2009/071341
(87) International publication number: WO 2010/074091

(57) **Abstract**

Provide a process for cutting a brittle-material plate, a window glass for vehicles obtained by the cutting process, and a system for cutting such a brittle-material plate, which are capable of cutting such a brittle-material plate in a desired planar shape in production with an automatic machine being utilized therein without making the cutting system complicated.

The process for cutting such a brittle-material plate includes a first step for forming a scribe line L2 on a top surface G1 of the plate G, and a second step for relatively moving the irradiation position A of the laser beam on the top surface G1 of the plate G along the scribe line L2 to cut the plate ahead of the irradiation position in the moving direction of the plate.

## Description

### TECHNICAL FIELD

The present invention relates to a process for cutting a brittle-material plate by irradiation of a laser beam. Specifically, the present invention relates to a process for cutting a brittle-material plate by relatively moving the irradiation position of a laser beam on a top surface of the plate along a scribe line, a window glass for a vehicle obtained by the cutting process, and a system for cutting a brittle-material plate.

### BACKGROUND ART

Heretofore, there has been known a process for cutting a brittle-material plate by forming a scribe line on a top surface of the plate, relatively moving the irradiation position of a laser beam on the top surface along the scribe line when the top surface is irradiated with the laser beam, and cooling the area heated by the laser beam by use of a cooling device (for example, see Patent Document 1).

On the other hand, a conventional scribing and breaking process, which forms a scribe line on a top surface of a plate, followed by applying bending stresses to the plate to cut the plate, is difficult to cut plates having some sort of shapes. For example, when an attempt is made to cut a glass plate which is shaped to have an outer periphery curved inwardly so as to be hollowed (so called incurved shape), it has been impossible to scribe and break such glass plates one after another by means of an automatic machine in an automatic production line in some cases, depending on the curvature, the depth, the width etc. of the incurved shape of such glass plates. In order to deal with such plates that have an incurved shape difficult to cut, there is no other way but to rely on manual cutting by a skilled worker on a line out of the automatic production line using an automatic machine. Mass production has been supposed to be impossible.

When a laser beam is utilized to cut a brittle-material plate, even if the irradiation center of the laser beam on a top surface of the plate is relatively moved on a scribe line formed along a linear cutting line (planned cutting line), the cutting line or the cutting sections cannot always be of symmetrical configuration. It is supposed that when the irradiation center of the laser beam on the top surface of the plate is relatively moved on the scribe line, the symmetry is lost, being affected by, e.g. the temperature history of the plate, the residual stresses in the plate, and the distance between a cutting position and a plate edge. As a result, it is difficult to provide the plate with a stable cutting section quality.

When the cutting line is curved, it is more difficult to provide a cutting section with a desired cutting section quality, such as accuracy in a cutting position or verticality. The reason is presumed to be that control becomes difficult since the above-mentioned factors, such as the temperature history of the plate, affect the cutting section quality in a more complicated way.

According to the process disclosed in the above-mentioned Patent Document 1, even when the cutting line is curved, it is possible to improve the cutting section quality since the irradiation position of a laser beam on a top surface of a plate is off-set in outward direction from the center of curvature of a scribe line (i.e. toward an outer radial direction in the radius of curvature).

### PRIOR ART DOCUMENT

### PATENT DOCUMENT

Patent Document 1: Japanese Patent No. 3027768

### DISCLOSURE OF INVENTION

### TECHNICAL PROBLEM

However, the process disclosed in Patent Document 1 makes a cutting system complicated since the operation to cool an area of a plate heated by a laser beam needs a cooling device. The plate is cut behind the irradiation position in the moving direction of the laser beam since the plate is cut by cooling the area heated by the laser beam.

When cutting proceeds behind the irradiation position, the range of the heated area expands and the range of occurrence of stresses also expands because of time lag between heating and cooling required to produce thermal stresses. As a result, the accuracy in a cutting position and the cutting section quality are degraded. In order to reduce the time lag between heating and cooling, it is preferred to bring a cooling device and a laser device close to each other. However, an attempt is made to configure a system such that the heating device and the cooling device follow a single track, there is a problem in that it is difficult to deal with cutting having a small curvature since it is difficult to reduce the size of the head portion of the cutting system because of spatial interference between both devices.

Patent Document 1 discloses that the offset value is set, depending on a cutting speed, the radius of curvature, the size of a beam spot, and the thickness of a plate. However, according to Patent Document 1, a plate is cut behind the irradiation position in the moving direction of the laser beam. In other words, Patent Document 1 is silent on a case where a plate is cut ahead of the irradiation position in the moving direction of the laser beam.

The present invention is proposed in consideration of the above-mentioned problem. It is an object of the present invention to provide a process for cutting a brittle-material plate, a window glass for a vehicle obtained by the cutting process, and a system for cutting such a brittle-material plate, which are capable of cutting such a brittle-material plate in a desired planar shape in production with an automatic machine being utilized therein without making the cutting system complicated. It is another object to provide a process for cutting such a brittle-material plate, which is capable of providing a cut glass plate with an excellent cutting section quality.

### SOLUTION TO PROBLEM

In order to attain the above-mentioned problem, the process for cutting a brittle-material plate according to the present invention is a process for cutting a brittle-material plate by converging a laser beam and irradiating the converged laser beam on the plate, which includes the following sequential steps of a first step for forming a scribe line on a top surface of the plate and a second step for relatively moving the irradiation position of the laser beam on the top surface of the plate along the scribe line to cut the plate ahead of the irradiation position in the moving direction.

The window glass for a vehicle according to the present invention is obtained by cutting a glass plate by the process for cutting a brittle-material plate according to the present invention.

The system for cutting a brittle-material plate according to the present invention is a system, which preliminarily forms a scribe line on a top surface of a brittle-material plate and relatively moves the irradiation position of a laser beam on the top surface of the plate along the scribe line to cut the plate ahead of the irradiation position in the moving direction, and which includes
a stage, which supports the plate;
an oscillator, which emits the laser beam;
an optical system, which converges the laser beam toward the plate, the laser beam emitted from the oscillator;
a driving unit, which relatively moves the stage and a combination of the oscillator and the optical system; and
a controller, which controls the outputs of the oscillator and the driving unit.

### ADVANTAGEOUS EFFECT OF INVENTION

In accordance with the present invention, it is possible to realize a process for cutting a brittle-material plate, a window glass for a vehicle obtained by the cutting process, and a system for cutting a brittle-material plate, which are capable of cutting such a brittle-material plate in a desired planar shape in production with an automatic machine being utilized therein without making the cutting system complicated. It is also possible to realize a process for cutting such a brittle-material plate, which is capable of providing a cut glass plate with an excellent cutting section quality.

The production with the automatic machine being utilized therein may be not only production incorporated in the production process of, e.g. a fully-automated plant but also production capable of being carried out industrial production mainly employing the automatic machine. For example, the production with the automatic machine being utilized therein includes semi-automated production with part of the process thereof being complemented by a worker, and production with products being manufactured, being taken out of a continuous production line employing a machine and, e.g. a conveyor.

### BRIEF DESCRIPTION OF DRAWINGS

Figs. 1(A) and (B) are schematic views showing the cutting system 10 according to an embodiment of the present invention;
Figs. 2(A) and (B) are schematic views showing a case where a laser beam is irradiated on a top surface G1 of a plate;
Figs. 3(A) and (B) are schematic views showing another case where the laser beam is irradiated on a top surface G1 of a plate;
Fig. 4 is a schematic view showing a case where the irradiation position A of the laser beam is reiativeiy moved along a curved portion L2-2 of a scribe line L2;
Fig. 5 is a graph showing cross-sectional gaps between an edge on a top surface G1 of the plate and an edge on a bottom surface G2 of the plate at a cutting section in each of Examples 1 to 3 and Comparative Example 1; and
Fig. 6 is a graph showing cross-sectional gaps between an edge on top surface G1 of the plate and an edge on a bottom surface G2 of the plate at a cutting section in each of Example 4 and Comparative Example 2.

### DESCRIPTION OF EMBODIMENTS

Now, the best mode of the present invention will be described in reference to the accompanying drawings. It should be noted that the X-direction, the Y-direction and the Z-direction in each figure indicate the width direction, the length direction and the thickness direction of a brittle-material plate G.

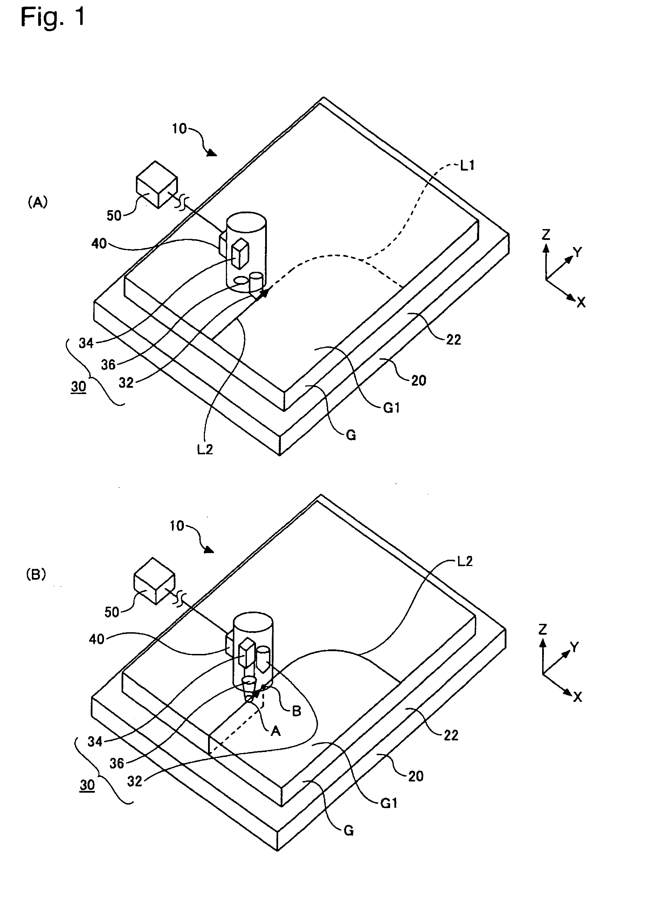

Figs. 1 (A) and (B) are schematic views showing the system 10 for cutting a brittle-material plate according to an embodiment of the present invention.

Fig. 1 (A) is a schematic view showing a first step of a cutting process realized by the cutting system 10, and Fig. 1 (B) is a schematic view showing a second step of the cutting process realized by the cutting system 10. In Fig. 1 (B), a reference symbol A indicates an irradiation position of a laser beam on a top surface G1 of the brittle-material plate G, and a reference symbol B indicates a leading edge in cutting on the top surface G1 of the brittle-material plate G.

The cutting system 10 first forms a scribe line L2 on the top surface G1 of the plate along a planned cutting line L1 as shown in Fig. 1(A) such that the plate G can be cut along the planned cutting line L1. Next, the cutting system relatively moves the irradiation position of the laser beam on the top surface G1 of the plate along the scribe line L2 as shown in Fig. 1(B) in order to cut the plate G by thermal stresses.

As shown in Figs. 1(A) and (B), the cutting system 10 includes a stage 20 for supporting a brittle-material plate G, a processing head 30 for processing the brittle-material plate G, a driving unit 40 for relatively moving the stage 20 and the processing head 30, and a controller 50.

The brittle-material plate G, which is processed by the cutting system 10, is a plate-like member, which has a property of absorbing a laser beam, and which is a glass plate made of, e.g. soda-lime glass or alkali-free glass, a metal plate made of, e.g. metal silicon, or a ceramic plate made of, e.g. alumina.

The thickness of the brittle-material plate G may be properly set, depending on the application of the plate G. For example, the plate has a thickness of preferably from 1 to 6 mm for the vehicle application. As the thickness decreases, a heat treatment for tempering by air quenching is more difficult. When the thickness is less than 1 mm, it is difficult to obtain a sufficient strength for the vehicle application. When the thickness is 6 mm or more, the weight of the plate is too heavy.

The stage 20 includes a supporting plane 22 for supporting a bottom surface G2 of the brittle-material plate G. The stage 20 may entirely support the bottom surface G2 of the plate or partly support the bottom surface G2 of the plate. The plate G may be fixed on the supporting plane by sucking or be fixed on the supporting plane by bonding.

The processing head 30 is standby above the stage 20 so as to be movable in the X-direction, the Y-direction and the Z-direction with respect to the stage 20 (i.e. the plate G). The processing head 30 has a scribing device 32, a laser oscillator 34 and an optical system 36 incorporated thereinto.

When the scribing device 32, and a laser device including the laser oscillator 34 and the optical system 36 for beam convergence are integrally mounted to the single processing head as described above, the system 10 is made simple and small, which is advantageous in cost. On the other hand, the scribe device 32, and the laser device including the laser oscillator 34 and the optical system 36 for beam convergence may be separately mounted on separate processing heads. When the scribe device and the laser device are separately mounted, it is possible to reduce tact time. Further, it is easy not only to perform control with the scribe device and the laser device following a single track but also to perform control with the scribe line L2 and the irradiation position A of the laser beam being intentionally shifted (being offset).

The scribe cutter 32 serves to form the scribe line L2 on the brittle-material plate G. The scribe line L2 is formed by pressing the leading edge of the cutter 32 to draw a line on the top surface G1 of the plate. It should be noted that the scribe line L2 according to this embodiment is an example formed by utilizing the scribe cutter 32. However, the scribe line L2 may be formed, being subjected to thermal stresses by use of a laser beam. There is no limitation in the way to form the scribe line L2.

The leading edge of the cutter 32 is made of, e.g. diamond or cemented carbide. The cutter 32 may be housed in an outer cylinder of the processing head 30 so as to prevent the top surface G1 of the plate from being inadvertently damaged and may be protruded out of the outer cylinder of the processing head 30 as needed.

The cutting system 10 irradiates the scribe line L2 with a laser beam to cause a crack to start at the scribe line L2 and propagate in order to cut the plate G.

The laser oscillator 34 serves to emit a laser beam. When a soda-lime glass plate as the plate G is cut, the laser oscillator 34 may be appropriately a high-power and high-efficiency semiconductor laser, which emits a laser beam having at least one specific wavelength in a range of from 795 to 1,030 nm. For example, an aluminum-free and long-life InGaAsP-based semiconductor laser (having wavelengths of 808 nm or 940 nm) may be appropriately employed. A part of the laser beam, which has a specific wavelength in a wavelength range of from 795 to 1,030 nm, passes through the glass plate G, another part of the laser beam is absorbed as heat by the glass plate G, and the other part of the laser beam is reflected by the glass plate G. In other words, the laser beam in the wavelength range of from 795 to 1,030 nm is effective to have an optimum thermal stress distribution because of being sufficient in transmittance and absorption.

When the laser cutting according to the present invention is employed, a plate of a brittle material to cut is split by thermal stresses without being moved spatially, which is different from the conventional cutting process employing bending stresses. Thus, it is possible to prevent cutting sections from being rubbed together at a time of cutting. As a result, it is possible not only to reduce the generation of glass rubbish(cullet) at the time of cutting but also to have an improved cutting section quality.

That is helpful not only to improve the yield of products but also to have an advantage offered by a decrease in cullet. Examples of the expected advantage include a reduction in the generation of poor quality caused by glass rubbish contamination, simplification in a cleaning process and an increased service life offered by a reduction in friction between parts in the system.

When the wavelength of the laser beam is set to be longer than the above-mentioned range, it is difficult to fabricate a semiconductor laser oscillator, such as a high-power laser oscillator having an output of at least 100 W. When the wavelength is set to be long (for example, a CO₂ laser beam having a wavelength of 10.6 µm), the absorption on the top surface G1 of a soda-lime glass plate G increases. When the wavelength is set at at least 5 µm, almost 100% of surface absorption occurs to prevent the inside of a glass plate from being directly heated by the laser beam.

When a large part of the laser beam is absorbed as heat in the vicinity of the top surface G1 of a soda-lime glass plate G, the top surface G of the plate, i.e. the scribe line L2 is overheated since glass has a low thermal conductivity in general. Thus, a crack also propagates in an in-plane direction (the X-direction and Y-direction), starting at minute chipping that is caused at the time of forming the scribe line L2. Accordingly, the generation of glass rubbish at the time of cutting increases, or the cutting section quality decreases.

On the other hand, the wavelength of the laser beam is short, it is difficult to obtain thermal stresses enough for cutting since the transmissivity increases.

The output of the laser beam may be properly set according to an amount of irradiation energy, which is defined by (unit volume)×(irradiance level per time). When soda-lime glass is cut, the temperature of the irradiated part of the soda-lime glass to cut is required to be a temperature not higher than the strain point. That is to say, it is preferred that the temperature of the irradiated part be from 50 to 300°C. When the output is low, it is difficult to obtain thermal stresses enough for cutting.

The laser beam emitted from the laser oscillator 34 is converged toward the plate G by the optical system 36 including a converging lens or the like, and the top surface G1 of the plate is irradiated with the converged laser beam.

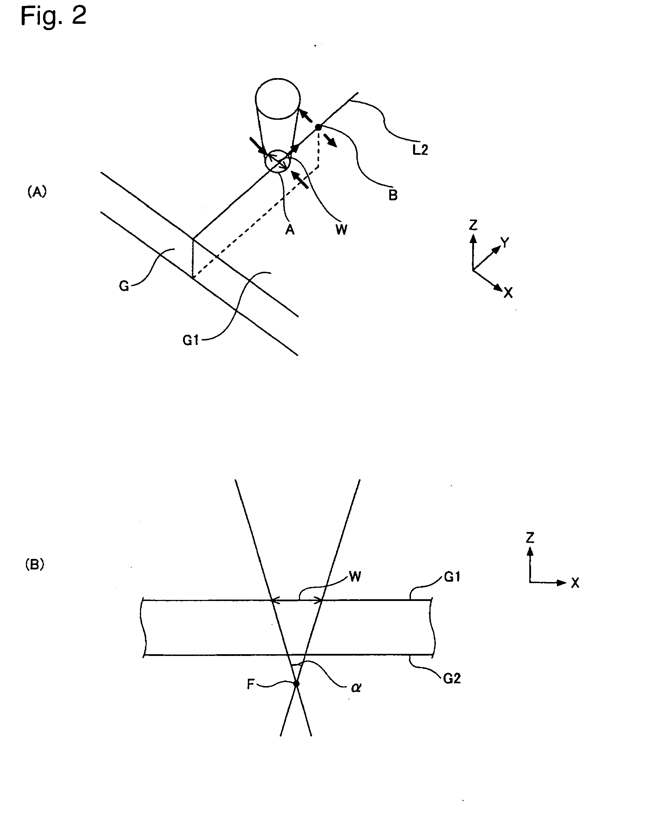

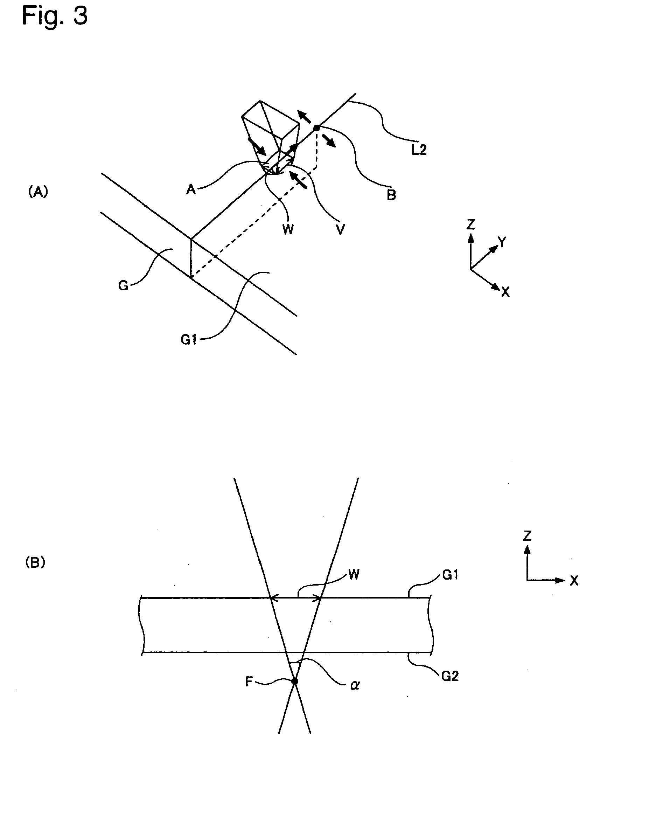

Figs. 2(A) and (B) are a perspective view and a cross-sectional view orthogonal to the moving direction of the irradiation position A, respectively, which show a case where the top surface G1 of the plate is irradiated with the laser beam. Figs. 3(A) and (B) are a perspective view and a cross-sectional view orthogonal to the moving direction of the irradiation position A, respectively, which show another case where the top surface G1 of the plate is irradiated with the laser beam. In Figs. 2(A) and (B), and Figs. 3(A) and (B), a reference symbol F designates the focal point of the laser beam.

In the case shown in Figs. 2(A) and (B), the laser beam is circular in section and is converged in a concentric fashion along the beam axis of the laser beam. The laser beam has a cross-sectional shape varying along the beam axis of the laser beam in terms of size W in the direction orthogonal to the moving direction of the irradiation position A.

In the case shown in Figs. 3(A) and (B), the laser beam is rectangular in section and is converged along the beam axis of the laser beam. The laser beam has a cross-sectional shape varying along the beam axis of the laser beam in terms of size W in the direction orthogonal to the moving direction of the irradiation position A. A size V of the laser beam in a direction parallel to the moving direction of the irradiation position A is set to be substantially constant along the beam axis of the laser beam.

The laser beam may have the focal point F on the same side of the bottom surface G2 of the plate with respect to the top surface G1 of the plate as shown in Figs. 2(A) and (B), and Figs. 3(A) and (B). The laser beam may have a focal point F on the opposite side of the bottom surface G2 of the plate with respect to the top surface G1 of the plate

It is preferred that the laser beam have a convergence angle α (see Fig. 2(B) and Fig.3(B)) set at from 10 to 34 degrees in section orthogonal to the moving direction of the irradiation position A.

When the convergence angle α is beyond 34 degrees, the cross-sectional shape of the laser beam significantly changes along the beam axis. As a result, the cutting section quality decreases since the difference between the thermal stresses in the top surface G and the bottom surface G2 of the plate becomes too large. The cutting section quality becomes unstable since a significant change in the cross-sectional shape of the laser beam along the laser axis causes the error in the focal point F to significantly affect the thermal stress distribution.

On the other hand, the convergence angle α is less than 10 degrees, the cutting section quality decreases since the difference between the thermal stresses in the top surface G1 and in the bottom surface G2 of the plate becomes too small.

It is preferred that the size W of the laser beam, which is a size in the direction orthogonal to the moving direction of the irradiation position A (see Fig. 2(B) and Fig. 3(B)), be from 2 to 10 mm on the top surface G1 of the plate.

When the size W on the top surface G1 of the plate is less than 2 mm, the scribe line L2 is overheated. As a result, a crack also propagates in the in-plane direction (the X-direction and the Y-direction) orthogonal to the scribe line L2. Further, the cutting section quality becomes unstable since the error in the irradiation position A significantly affects the thermal stress distribution.

On the other hand, when the size W on the top surface G1 of the plate is beyond 10 mm, an unnecessary portion is heated. As a result, the generation of unnecessary thermal stresses decrease the cutting section quality. Further, the tensile stresses generated at the scribe line L2 decrease since the generated heat diffuses, making it difficult to obtain thermal stresses enough for cutting.

The processing head 30 is relatively moved in X-direction, the Y-direction and the Z-direction with respect to the stage 20 by the driving unit 40. In order to realize this function, the stage 20, which supports the plate G, may be fixed such that the processing head 30 is relatively moved by the driving unit 40. Alternatively, the processing head 30 may be fixed such that the stage 20 for supporting the plate G is relatively moved by the driving unit 40. The driving unit 40 may have a well known structure, for example, is configured to include X-, Y and Z-guide rails for guiding the processing head 30 in the X-direction, the Y-direction and the Z-direction, and an actuator for driving the processing head 30.

In this embodiment, the scribe line L2 is formed on the top surface G1 of the plate, and the irradiation position A of the laser beam on the top surface G1 of the plate is relatively moved along the scribe line L2 as described above. The output control of the oscillator 34 and the output control of the driving unit 40 are carried out by the controller 50 including a microcomputer.

The controller 50 is connected to, e.g. a position sensor (not shown) for measuring the position coordinate of the processing head 30. The controller 50 controls various movements of the cutting system 10 based on output signals from, e.g. the position sensor, as described later.

Now, a process for cutting a brittle-material plate according to this embodiment will be described in reference to Figs. 1(A) and 1(B).

First, the plate G is placed on the stage 20, and the processing head 30 is moved to a position confronting the starting point of the cutting line L1 on the plate G. Next, the processing head 30 starts lowering. After that, the scribe cutter 32 of the processing head 30 lowers and is pressed against the top surface G1 of the plate under a certain pressure. Further, the scribe line L2 is scribed at a certain speed as shown in Fig. 1(A).

Then, the processing head 30 and the scribe cutter 32 are raised, and the processing head 30 is returned to the position confronting the starting point of the scribe line L2. Next, the processing head 30 starts lowering.

After that, when the processing head 30 is brought closer to the top surface G1 of the plate by a certain distance, the laser beam is emitted from the oscillator 34. The laser beam emitted from the oscillator 34 is converged by the optical system 36, irradiating the starting point of the scribe line L2.

The area irradiated with the laser beam is hotter than the surroundings of the irradiated area since a part of the laser beam is adsorbed as heat. Thus, the irradiated area is thermally expanded to generate compressive stresses as shown in Fig. 2(A) and Fig. 3(A).

On the other hand, the surroundings of the irradiated area are subjected to tensile stresses by reaction. By the tensile stresses, a crack propagates, starting at the scribe line L2, thus starting cutting. An edge on the top surface G1 of the plate at the cutting section substantially coincide with the scribe line L2 since the cutting is carried out such that the crack propagates, starting at the scribe line L2.

In this state, the irradiation position A of the laser beam on the top surface G1 of the plate is moved along the scribe line L2. As a result, the plate G is cut ahead of the irradiation position A in the moving direction. In other words, the leading edge B in cutting is ahead of the irradiation position A of the laser beam in the moving direction.

When the scribe line L2 is linear, the irradiation center of the laser beam on the top surface G1 of the plate is moved on the scribe line L2. As a result, the tensile stresses is symmetrical with respect to the scribe line L2 in the vicinity of the leading edge B in cutting ahead of the irradiation position A of the laser beam in the moving direction, with the result that the cutting section quality, such as the verticality or the linearity of the cutting section, is improved.

In a case where the scribe line L2 is curved as mentioned above, when the irradiation center of the laser beam on the top surface G1 of the plate is relatively moved on the scribe line L2, the cutting section quality is adversely affected. This adverse effect tends to shift an edge on the bottom surface G2 of the plate outwardly in a radial direction of the radius of curvature in comparison with an edge on the top surface G1 of the plate at the cutting section. Accordingly, the cutting section is inclined with respect to a thickness direction (the Z-direction), decreasing the cutting section quality.

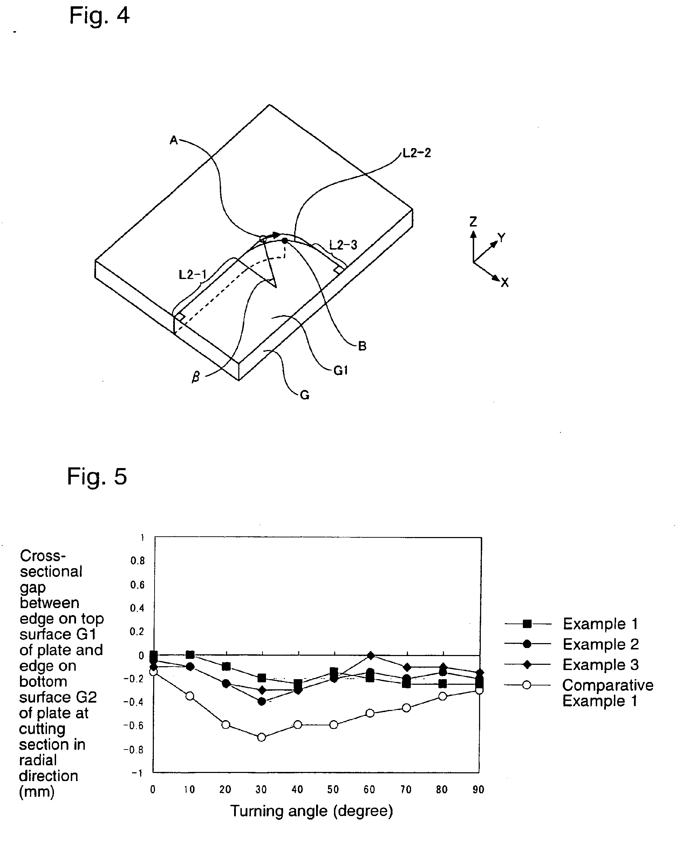

In this embodiment, in order to cope with this problem, when the irradiation position A is relatively moved along the scribe line L2 containing a curved portion, the irradiation position is relatively displaced in a direction orthogonal to the scribe line L2 according to the shape of the scribe line L2 as shown in Fig. 4. Thus, it is possible to improve the cutting section quality by optimizing the thermal stress distribution.

In the case shown in Fig. 4, the scribe line L2 contains linear portions L2-1 and L2-3, and an arcuate curved portion L2-2 in an arcuate shape. In this case, the irradiation position A is relatively and gradually displaced outwardly in the radial direction from the starting point to an intermediate point of the arcuate portion L2-2 when being moved along the arcuate portion L2-2. On the other hand, the irradiation position is relatively and gradually displaced inwardly in the radial direction from the intermediate point to the ending point of the arcuate portion L2-2. The "intermediate point" means a point between the starting point and the ending point, which contains not only the midpoint equidistance from both of the starting point and the ending point but also a point closer to one of the starting point and the ending point. The above-mentioned radial direction means a radial direction that is employed to find the radius of curvature of an arcuate portion, such as an arc.

The displacement of the irradiation position A may be properly set according to the moving speed of the irradiation position A of the laser beam on the top surface G1 of the plate, the irradiation shape of the laser beam on the top surface G1 of the plate, the focal point F, the thickness of the plate G, a processing speed, a shape to process, or the physical property of the plate G (linear thermal expansion coefficient or transmissivity) in addition to the shape of the scribe line L2. The above-mentioned amount of displacement is selected so as to have an optimum thermal stress distribution, which is required not only to carry out cutting along a desired scribe line but also to obtain a vertical cutting section.

As described above, according to this embodiment, the irradiation position A of the laser beam on the top surface G1 of the plate is relatively moved along the scribe line L2 to cut the plate G ahead of the irradiation position A in the moving direction by thermal stresses. Thus, it is possible to eliminate a cooling device and to cut the plate G without making the system 10 complicated.

Further, according to this embodiment, when the irradiation position A is relatively moved along the scribe line L2 containing a curved portion, the irradiation position is relatively displaced in a direction orthogonal to the scribe line L2 according to the shape of the scribe line L2. Thus, it is possible to optimize the thermal stress distribution and to improve the cutting section quality. By contrast, if the irradiation center of the laser beam on the top surface G1 of the plate is relatively moved on the scribe line L2 for example, the cutting section is inclined with respect to the thickness direction (Z-direction), decreasing the cutting section quality.

### EXAMPLE

Now, the present invention will be described in more detail in reference to Examples.

### EXAMPLES 1 to 4

Soda lime glass plates, which had a green tint and a thickness of 3.5 mm and manufactured by a float method (glass plates for automobiles manufactured by Asahi Glass Company, Limited) were prepared. In each Example, the glass plate G was placed on the stage 20 shown in Fig. 1. Next, the diamond cutter 32 was employed to scribe a scribe line L2 on the top surface G1 of the glass plate at a speed of 200 mm/sec, being pressed against the top surface of the glass plate with a force of 55 N. The scribe line L2 contained a first linear portion L2-1, a quarter arcuate portion L2-2, and a second linear portion L2-3 in this sequential order. The shape of the scribe line L2 in each of Examples 1 to 4 is shown in Table 1. The above-mentioned quarter arcuate portion means a quarter portion of a circle that is drawn based on the arcuate portion (the same applies hereinafter).

**TABLE 1**

| | Length of first linear portion L2-1 (mm) | Radius of curvature of quarter arcuate portion L2-2 (mm) | Length of second linear portion L2-3 (mm) |
|---|---|---|---|
| Ex. 1 | 230 | 50 | 230 |
| Ex. 2 | 230 | 50 | 230 |
| Ex. 3 | 230 | 50 | 230 |
| Ex. 4 | 170 | 110 | 170 |
| Comp. Ex. 1 | 230 | 50 | 230 |
| Comp. Ex. 2 | 170 | 110 | 170 |

Next, in each of the Examples, the top surface G1 of the glass plate G was irradiated with the laser beam shown in Figs. 3(A) and (B), and the irradiation position A of the laser beam on the top surface G1 of the plate was relatively moved along the scribe line L2 at a speed of 100 mm/s to cut the glass plate G by the thermal stresses. Specifically, first, the irradiation center of the laser beam on the top surface G1 of the plate was relatively moved on the first linear portion L2-1. Next, while the irradiation position A of the laser beam on the top surface G1 of the plate was relatively moved along the quarter arcuate portion L2-2, the irradiation position was relatively and gradually displaced outwardly in the radial direction from the starting point to the midpoint of the quarter arcuate portion L2-2. Then, the irradiation position was relatively and gradually displaced inwardly in the radial direction from the midpoint to the ending point of the quarter arcuate portion. The amount of displacement of the irradiation position A was changed in proportion to a turning angle β from the starting point (see Fig. 4). At the starting point (β=0 degree) and the ending point (β=90 degrees) of the arcuate portion L2-2, the irradiation center of the laser beam on the top surface G1 of the plate coincided with the quarter arcuate portion L2-2. Finally, the irradiation center of the laser beam on the top surface G1 of the plate was relatively moved on the second linear portion L2-3.

The wavelength of the laser beam, the focal point F, the output, the irradiation shape on the top surface G1 of the plate (dimensions W by V), and the maximum amount of displacement of the irradiation position A in each of Examples 1 to 4 are shown in Table 2. In each of Tables 2 to 5, the wording "OUTSIDE-DEFOCUS" means that the focal point F was placed on the opposite side of the bottom surface G2 of the plate (on the same side of the oscillator 34) with respect to the top surface G1 of the plate. On the other hand, the wording "INSIDE-DEFOCUS" means that the focal point F was placed on the same side of the bottom surface G2 of the plate (on the opposite side of the oscillator 34) with respect to the top surface G 1 of the plate.

**TABLE 2**

| | Wavelength (nm) | Focal point | Irradiation shape (mm) | Output (W) | Maximum amount of displacement (mm) |
|---|---|---|---|---|---|
| Ex. 1 | 808 | OUTSIDE-DEFOCUS | 5×10 | 750 | 2 |
| Ex.2 | 808 | OUTSIDE-DEFOCUS | 5×10 | 750 | 4 |
| Ex.3 | 808 | OUTSIDE-DEFOCUS | 5×10 | 750 | 6 |
| Ex.4 | 808 | OUTSIDE-DEFOCUS | 5×10 | 650 | 4 |
| Comp. Ex. 1 | 808 | OUTSIDE-DEFOCUS | 5×10 | 750 | 0 |
| Comp. Ex.2 | 808 | OUTSIDE-DEFOCUS | 5×10 | 650 | 0 |

### COMPARATIVE EXAMPLES 1 to 2

In each of Comparative Examples 1 to 2, the scribe line L2 was formed, and the glass plate G was cut in the same way as Examples 1 to 4 except that the irradiation center of the laser beam on the top surface G1 of the plate was relatively moved on the quarter arcuate portion L2-2.

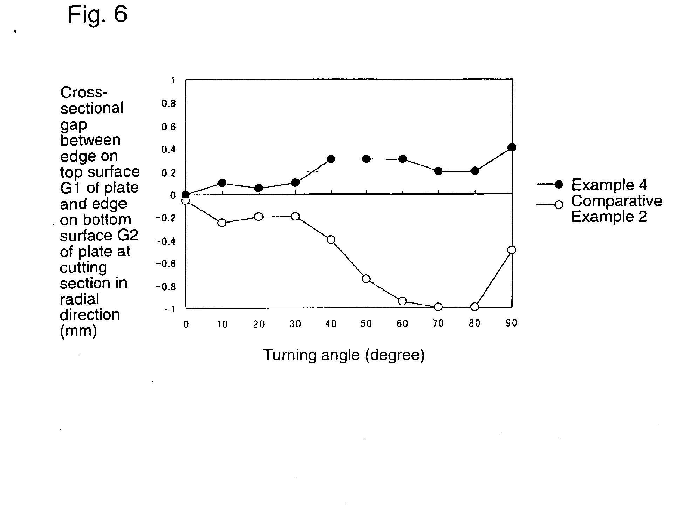

The cross-sectional gap in each of Examples 1 to 4 and each of Comparative Examples 1 to 2 was measured. The cross-sectional gap was measured along the quarter arcuate portion L2-2. The measurement results are shown in Figs. 5 and 6. In Figs. 5 and 6, the horizontal axis indicates the turning angle β from the starting point of the quarter arcuate portion L2-2, and the vertical axis indicates the gap between the edge on the top surface G1 of the plate and the edge on the bottom surface G2 of the plate at the cutting section in the radial direction. The cases where the edge on the bottom surface G2 of the plate shifted outwardly in the radial direction in comparison with the edge on the top surface G1 of the plate at the cutting section are shown as having negative values. In each of Examples 1 to 4 and each of Comparative Examples 1 to 2, the edge on the top surface G1 of the plate at the cutting section substantially coincided with the quarter arcuate portion L2-2.

Fig. 5 is a diagram showing the gap between the edge on the top surface G1 of the plate and the edge on the bottom surface G2 of the plate at the cutting section in each of Examples 1 to 3 and Comparative Example 1. Fig. 6 is a diagram showing the gap between the edge on the top surface G1 of the plate and the edge on the bottom surface G2 of the plate at the cutting section in each of Example 4 and Comparative Example 2.

Figs. 5 and 6 reveal that the gap in the radial direction in each of Examples 1 to 4 had excellent values since the radiation position A was relatively and gradually displaced in the radial direction. To the contrary, it is revealed that the gap in the radial direction in each of Comparative Examples 1 to 2 was out of an adequate range since the irradiation position A was not relatively displaced in the radial direction. In each of Comparative Example 1 to 2, the edge on the bottom surface G2 of the plate at the cutting section had a tendency to shift outwardly in the radial direction.

### EXAMPLES 5 to 7 and COMPARATIVE EXAMPLE 3

In each of the Examples 5 to 7 and Comparative Example 3, the scribe line L2 was formed in the same way as Examples 1 to 4 except that the scribe line L2 was formed in a linear shape at the center of the top surface of the glass plate. Then, the laser beam shown in Figs. 2 (A) and (B) was employed to cut the glass plate under the conditions described in Table 3. The evaluation results on the amount of glass rubbish at the time of cutting and the cutting section quality are also shown in Table 3.

Table 3 reveals that the cutting section quality in each of Examples 5 to 7 was good since the size W on the top surface G1 of the plate was set in a range of from 2 to 10 mm. To the contrary, in Comparative example 3, the value of 1 mm as the size W on the top surface G1 of the plate was too small. As a result, the scribe line L2 was overheated, and a crack also propagated in the in-plane direction (the X-direction and the Y-direction), starting at minute chipping that was caused at the time of forming the scribe line L2, with the result that the cutting section quality decreased.

**TABLE 3**

| | Wavelength (nm) | Convergence angle (degree) | Focal point | irradiation shape (mm) | Output (W) | Glass rubbish | Cutting section quality |
|---|---|---|---|---|---|---|---|
| Ex.5 | 808 | 18 | INSIDE-DEFOCUS | 3 in diameter | 400 | Good | Good |
| Ex.6 | 808 | 18 | INSINDE-DEFOCUS | 5 in diameter | 400 | Good | Good |
| Ex.7 | 808 | 18 | INSIDE-DEFOCUS | 10 in diameter | 400 | Good | Good |
| Comp. Ex.3 | 808 | 18 | INSIDE-DEFOCUS | 1 in diameter | 400 | Good | Not good |

### EXAMPLES 8 to 14 and COMPARATIVE EXAMPLES 4 to 8

In each of Examples 8 to 14 and each of Comparative Examples 4 to 8, the scribe line L2 was formed in the same way as Examples 5 to 7. Then, the laser beam shown in Figs. 2(A) and (B) or Figs. 3(A) and (B) were employed, the glass plate was cut under the conditions described in Table 4. The evaluation results on the amount of glass rubbish at the time of cutting and the cutting section quality are also shown in Table 4.

As shown in Table 4, the convergence angle α was set in a range of from 10 to 34 degrees in each of Example 8 to 14. As a result, the cutting section quality was good. To the contrary, the values of 0 degree and 8 degrees as the convergence angle α in Comparative Examples 4 to 6 were too small, resulting in a decrease in the cutting section quality. It is estimated that the reason is that the difference between thermal stresses in the top surface G1 and the bottom surface G2 of the plate was too small. The value of 60 degrees as the convergence angle α in each of Comparative Examples 7 to 8 was too large, resulting in a decrease in the cutting section quality. It is estimated that the reason is that the difference between thermal stresses in the top surface G1 and the bottom surface G2 of the plate was too large.

**TABLE 4**

| | Wavelength (nm) | Convergence angle (degree) | Focal point | Output (W) | Glass rubbish | Cutting section quality |
|---|---|---|---|---|---|---|
| Ex.8 | 808 | 32 | INSIDE-DEFOCUS | 450 | Good | Good |
| Ex.9 | 808 | 32 | INSIDE-DEFOCUS | 450 | Good | Good |
| Ex. 10 | 808 | 32 | INSIDE-DEFOCUS | 450 | Good | Good |
| Ex. 11 | 808 | 32 | OUTSIDE-DEFOCUS | 400 | Good | Good |
| Ex. 12 | 808 | 32 | OUTSIDE-DEFOCUS | 400 | Good | Good |
| Ex. 13 | 808 | 32 | OUTSIDE-DEFOCUS | 400 | Good | Good |
| Ex. 14 | 808 | 34 | INSIDE-DEFOCUS | 400 | Good | Good |
| Comp. Ex.4 | 808 | 0 | - | 400 | Good | Not good |
| Comp. Ex. 5 | 808 | 0 | - | 400 | Good | Not good |
| Comp. Ex. 6 | 808 | 8 | OUTSIDE-DEFOCUS | 400 | Good | Not good |
| Comp. Ex. 7 | 808 | 60 | INSIDE-DEFOCUS | 400 | Good | Not good |
| Comp. Ex. 8 | 808 | 60 | INSIDE-DEFOCUS | 400 | Good | Not good |

### EXAMPLE 15 and COMPARATIVE EXAMPLES 9 to 10

In each of Example 15 and Comparative Examples 9 to 10, the scribe line L2 was formed in the same way as Examples 5 to 7. Then, the laser beam shown in Figs. 2(A) and (B) or Figs. 3(A) and (B) was employed to cut the glass plate under the conditions described in Table 5. The evaluation results on the amount of glass rubbish at the time of cutting and the cutting section quality are also shown in Table 5.

As shown in Table 5, the wavelength of the laser beam in Example 15 was set in a range of from 780 to 940 nm. As a result, the laser beam had a sufficient transmissivity and a sufficient absorption, and the cutting section quality was good. On the other hand, in each of Comparative Examples 9 to 10, the top surface G1 of the plate was overheated since the wavelength of the laser beam was so long, with the result that the scribe line L2 was overheated. As a result, a crack also propagated in the in-plane direction (the X-direction and the Y-direction), starting at minute chipping that was caused at the time of forming the scribe line L2. Accordingly, the generation of glass rubbish at the time of cutting increased, or the cutting section quality decreased.

**TABLE 5**

| | Wavelength (nm) | Convergence angle (degree) | Focal point | Irradiation shape (mm) | Output (W) | Glass rubbish | Cutting section quality |
|---|---|---|---|---|---|---|---|
| Ex.15 | 940 | 34 | INSIDE-DEFOCUS | 7.4×7.4 | 400 | Good | Good |
| Comp. Ex.9 | 1060 | 14 | OUTSIDE-DEFOCUS | 9 in diameter | 400 | Good | Not good |
| Comp. Ex. 10 | 10600 | - | - | 9 in diameter | 200 | Not good | Good |

Although the preferred embodiments of the present invention has been described in detail, the present invention is not limited to the above-mentioned embodiments. Various modification or replacement may be made to the above-mentioned embodiments without departing from the scope of the present invention.

For example, although explanation of Fig. 4 was made about a case where the arcuate portion L2-2 is relatively displaced in the radial direction when the irradiation position A is relatively moved along the arcuate portion L2-2, the present invention is not limited to this case. For example, the irradiation position A may be relatively displaced in a direction orthogonal to the first linear portion L2-1 when being relatively moved along the first linear portion L2-1. Thus, it is possible to optimize the thermal stress distribution and to improve the cutting section quality.

Although the scribe line L2 contains the linear portions L2-1 and L2-3, and the arcuate portion L2-2 in Fig. 4 described above, the present invention is not limited to this embodiment. For example, the scribe line L2 may contain an S-letter shaped portion formed of a first arcuate portion and a second arcuate portion. When the scribe line contain such an S-letter shaped portion, the two arcuate portions exist, being directed in opposite directions. In such a case as well, the irradiation position A is relatively and gradually displaced outwardly in the radial direction from the starting point to the midpoint of each of the arcuate portions while being relatively moved along each of the arcuate portions. Then, the irradiation position is relatively and gradually displaced inwardly in the radial direction from midpoint to the ending point of each of the arcuate portions. Thus, it is possible to optimize the thermal stress distribution and to improve the cutting section quality.

Although the irradiation center of the laser beam on the top surface G1 of the plate coincides with the arcuate portion L2-2 at the starting point and the ending point of the arcuate portion L2-2 in each of Examples 1 to 4 described above, the present invention is not limited to this operation. For example, the irradiation center of the laser beam on the top surface G1 of the plate may be offset outwardly or inwardly in the radial direction at the starting point and the ending point of the arcuate portion L2-2.

Although the laser beam is formed in a circular shape or rectangular shape in section in Figs. 2(A) and (B) and Figs. 3(A) and (B) described above, the laser beam may be formed in an elliptical shape in section.

### INDUSTRIAL APPLICABILITY

The present invention is applicable to the manufacture of a window glass for vehicles represented by automobiles, a window glass for other vehicles, airplanes, ships, buildings or the like, a glass substrate for thin display panels, and a substrate for hard disks.

The entire disclosure of Japanese Patent Application No. 2008-329734 filed on December 25, 2008 including specification, claims, drawings and summary is incorporated herein by reference in its entirety.

### REFERENCE SYMBOLS

- 10: system for cutting a brittle-material plate
- 20: stage
- 30: processing head
- 32: scribe cutter
- 34: laser oscillator
- 36: optical system (converging lens)
- 40: drive unit
- 50: controller

## Claims

1. A process for cutting a brittle-material plate, which comprises cutting a brittle-material plate by converging a laser beam and irradiating the converged laser beam on the plate, comprising:
a first step for forming a scribe line on a top surface of the plate, and;
a second step for relatively moving an irradiation position of the laser beam on the top surface of the plate along the scribe line to cut the plate ahead of the irradiation position in the moving direction of the plate.

2. The process according to Claim 1, wherein the scribe line contains at least one linear portion and at least one curved portion;
the curved portion is formed in an arcuate shape having at least one curvature; and
the irradiation position is relatively moved along the arcuate portion while being gradually displaced outwardly in a radial direction of a radius of the curvature from a starting point to a midpoint of the arcuate portion and being gradually displaced inwardly in the radial direction of the radius of the curvature from the midpoint to an ending point of the arcuate portion.

3. The process according to Claim 1, wherein the scribe line contains at least one curved portion; the curved portion is formed in an arcuate shape having at least one curvature; and the irradiation position is relatively moved along the arcuate portion while being gradually displaced outwardly in a radial direction of a radius of the curvature from a starting point to a midpoint of the arcuate portion and being gradually displaced inwardly in the radial direction of the radius of the curvature from the midpoint to an ending point of the arcuate portion.

4. The process according to any one of Claims 1 to 3, wherein the laser beam is converged toward the plate; a part of the laser beam passes through the plate, and another part of the laser beam is absorbed as heat by the plate.

5. The process according to any one of Claims 1 to 4, wherein the plate comprises a glass plate.

6. The process according to Claim 4, wherein the laser beam is a laser beam having at least one specific wavelength in a range of from 795 to 1,030 nm; and the plate comprises a soda-lime glass plate.

7. The process according to Claim 6, wherein the laser beam is a laser beam emitted from a semiconductor laser.

8. The process according to any one of Claims 4 to 7, wherein the laser beam has a convergence angle of from 10 to 34 degrees in section orthogonal to the moving direction of the irradiation position.

9. The process according to any one of Claims 4 to 8, wherein the laser beam has a size of from 2 to 10 mm on the top surface of the plate in a direction orthogonal to the moving direction of the irradiation position.

10. The process according to any one of Claims 1 to 9, wherein the first step further comprises forming the scribe line by a scribe cutter.

11. The process according to any one of Claims 1 to 9, wherein the first step further comprises forming the scribe line by a laser beam.

12. The process according to any one of Claims 1 to 11, wherein the plate has a thickness of from 1 to 6 mm.

13. A window glass for vehicles obtainable by cutting a glass plate by the process defined in Claim 12.

14. A system for cutting a brittle-material plate, which irradiates a laser beam on a brittle-material plate to cut the plate by thermal stresses; comprising:
a stage, which supports the plate;
a laser oscillator, which emits the laser beam;
an optical system, which converges the laser beam toward the plate, the laser beam emitted from the oscillator;
a driving unit, which relatively moves the stage and a combination of the laser oscillator and the optical system; and
a controller, which controls outputs of the laser oscillator and the driving unit;
wherein an irradiation position of the laser beam on a top surface of the plate where a scribe line is preliminarily formed is relatively moved along the scribe line to cut the plate ahead of the irradiation position in the moving direction.

15. The system according to Claim 14, further comprising a processing head, the processing head including a scribing device and the laser oscillator.

16. The system according to claim 14 or 15, wherein the scribe line contains a curved portion; and
the controller is configured to relatively move the irradiation position along the scribe line while relatively moving the irradiation position in a direction orthogonal to the scribe line according to a shape of the scribe line.

17. The system according to any one of Claims 14 to 16, wherein the laser oscillator is configured to emit a laser beam having at least one specific wavelength in a range of from 795 to 1,030 nm.

18. The system according to any one of Claims 14 to 17, wherein the plate comprises a glass plate.

19. The system according to any one of Claims 14 to 18, wherein the plate comprises a soda-lime glass plate having a thickness of from 1 to 6 mm.
